# EUROPÄISCHE PATENTSCHRIFT

(11) **EP 2 707 286 B1**
(45) Veröffentlichungstag und Bekanntmachung des Hinweises auf die Patenterteilung: **10.02.2016**
(21) Anmeldenummer: 12724890.4
(22) Anmeldetag: 02.05.2012
(51) Int. Cl.: B65B 1/22, B65B 1/34, G01G 13/04, B65B 1/48, B65B 1/10

(54) **PACKMASCHINE UND VERFAHREN ZUM FÜLLEN VON OFFENEN SÄCKEN**
PACKING MACHINE AND METHOD FOR FILLING OPEN SACKS
MACHINE DE CONDITIONNEMENT ET PROCÉDÉ POUR REMPLIR DES SACS OUVERTS

(30) Priorität: 09.05.2011 DE 102011101045
(43) Veröffentlichungstag der Anmeldung: 19.03.2014
(73) Patentinhaber: Haver & Boecker OHG, 59302 Oelde (DE)
(72) Erfinder: WEHLING, Mark, 59320 Ennigerloh (DE)
(74) Vertreter: BSB Intellectual Property Law
(86) Internationale Anmeldenummer: PCT/EP2012/001872
(87) Internationale Veröffentlichungsnummer: WO 2012/152401

(56) Entgegenhaltungen:
- EP-A1- 0 623 515
- EP-A1- 0 623 810
- EP-A1- 2 436 602
- WO-A2-2005/110849
- DE-A1-102008 020 253
- US-A- 6 000 444

## Beschreibung

Die vorliegende Erfindung betrifft eine Packmaschine und ein Verfahren zum Füllen von offenen Säcken. Die erfindungsgemäße Packmaschine kann zur Abfüllung von Schüttgütern aller Art vorgesehen sein. Besonders bevorzugt wird eine solche Anlage aber zur Abfüllung von Feinprodukten eingesetzt, also zur Abfüllung von feinen und staubenden Produkten, die eine entsprechend lange Füll- und insbesondere Verdichtungszeit benötigen.

Mit der EP 0 623 810 A1 ist eine Wägefüllmaschine zur gleichzeitigen Abfüllung von zwei unterschiedlichen Füllgütern in oben offene Behälter bekannt geworden, wobei das zweite Füllgut ein nicht-selbstfließendes Produkt wie Mehl, Kakaopulver, Kaffeemehl oder auch ein pastöses Produkt sein kann. Die Produkte werden in oben offene Behälter gefüllt, die nach der Füllung einer Weiterbehandlungssation wie einer Deckelschließstation zugeführt werden. Nachteilig ist bei dieser bekannten Maschine der hohe apparative und konstruktive Aufwand der Wägefüllmaschine, die zur gleichzeitigen Abfüllung mehrerer unterschiedlicher Füllgüter in einen Behälter ausgebildet ist. Ein weiterer Nachteil der bekannten Maschine ist, dass durch den Freiraum zwichen dem Auslaufkanal des Fülltrichters und dem Behälter bedingt bei der Abfüllung von staubenden Materialien eine ganz erhebliche Menge Staub austritt. Das führt zu einer nicht mehr tolerierbaren Staubbelastung, wenn staubende Produkte abgefüllt werden. Für die Abfüllung von stückigen, flüssigen oder pastösen Produkten ist eine solche Wägefüllmaschine aber geeignet.

Zur Abfüllung von staubenden Produkten werden deshalb Packmaschinen eingesetzt, bei welchen ein Ventilsack oder ein Offensack dicht an den Füllstutzen angehangen wird, sodass der Austritt von Staub erheblich verringert wird.

Im Stand der Technik sind verschiedenste Packmaschinen zum Füllen von offenen Säcken bekannt geworden. Beispielsweise werden oftmals sogenannte FFS-Packmaschinen ("Form-Fill-Seal-Packmaschinen") eingesetzt, um effektiv Schüttgut in offene Säcke abzufüllen. Bei solchen FFS-Packanlagen wird der oben offene Sack innerhalb der Maschine oder in einer direkt vorgelagerten Einrichtung gefertigt. Der Maschine wird eine Folienschlauchrolle zugeordnet, aus der während des Betriebes fortlaufend die benötigten offenen Säcke hergestellt werden. Ein erheblicher Vorteil einer solchen FFS-Packmaschine besteht darin, dass die offenen Säcke in ihrer tatsächlich benötigten Länge hergestellt werden können. Es muss nicht auf vorkonfektionierte Säcke zurückgegriffen werden, die zudem teurer sind.

FFS-Packmaschinen verarbeiten offene Säcke aus Kunststofffolie, die wasserdicht ausgeführt sein können. Deshalb können mit feuchtigkeitsempfindlichen Materialien - wie beispielsweise Zement - gefüllte offene Säcke nach dem Verschließen auch im Freien gelagert werden, da der Inhalt zuverlässig vor Feuchtigkeit geschützt aufgenommen ist.

Nachteilig bei bekannten Packmaschinen zum Füllen von offenen Säcken ist die begrenzte Abfüllleistung, insbesondere, wenn staubende Feinprodukte abgefüllt werden sollen, da diese Produkte in der Regel entlüftet werden müssen, um ein stabiles Gebinde zur Verfügung zu stellen, in welchem möglichst wenig Luft enthalten ist. Enthaltene Luft verringert außerdem die Stapelfähigkeit.

Mit der DE 10 2008 020 253 A1 ist eine Packanlage zum Füllen von Lebensmitteln in vorkonfektionierte offene Säcke bekannt geworden. Die offenen Säcke werden zur Abfüllung dicht an einen Füllstutzen angeschlossen. Die bekannte Packanlage rotiert getaktet. An einer ersten Drehposition wird ein offener Sack angesteckt. In der zweiten Drehposition wird der offene Sack im Grobstrom gefüllt, bis der Großteil des abzufüllenden Produkts eingebracht ist. Nach der getakten Weiterrotation wird der offene Sack in der dritten Drehposition gewogen und gleichzeitig im Feinstrom gefüllt, bis das gewünschte Gewicht erreicht ist und die Füllung gestoppt wird. An der vierten Drehposition wird der offene Sack abenommen. Die bekannte Anlage funktioniert zuverlässig. Nachteilig ist aber die begrenzte Leistung. Um eine Überfüllung zu vermeiden, wird das Produkt relativ langsam eingefüllt. Es können zwar vier offene Säcke gleichzeitig bearbeitet werden, aber durch die Taktung der Rotation bedingt, treten regelmäßig Leerzeiten auf, die die Effektivität senken.

Bei der Abfüllung von staubenden Feinprodukten in luftdurchlässige Ventilsäcke wird der Ventilsack abgedichtet an einem horizontalen Füllstutzen aufgenommen. Der Füllvorgang erfolgt mit Überdruck. Der Ventilsack wird direkt zu Beginn des Füllvorganges möglichst schnell gefüllt und durch das weitere Einfüllen von Schüttgut unter einen erheblichen Überdruck gesetzt. Der Überdruck führt zu einer effektiven Entlüftung durch die luftdurchlässige Außenwand oder durch entsprechende Entlüftungsventile. Während des Füllvorganges wird laufend das Gewicht des Ventilsackes in einem Brutto-Wägeverfahren erfasst. Die Drehgeschwindigkeit des Förderorgans wird nach der Grobstromphase zu Beginn der Feinstromphase reduziert. Außerdem wird der Förderquerschnitt durch teilweises Schließen eines Scherenventils verringert, sodass der Füllvorgang in der Feinstromphase erheblich verlangsamt wird, wenn das angestrebte Füllgewicht nahezu erreicht wird. Durch die Füllung im Feinstrom am Ende des Füllvorganges kann die Gewichtsgenauigkeit verbessert werden. Nach einer ausreichenden Wartezeit, während derer der Ventilsack selbsttätig entlüftet, wird der Ventilsack abgenommen. Der Überdruck im Ventilsack kann beispielsweise auch über einen Drucksensor überwacht werden. Dadurch wird auch bei sehr feinen Materialien eine effektive Abfüllleistung ermöglicht.

Bei der Abfüllung von Schüttgütern in oben offene Säcke kann der Füllvorgang nicht mit Überdruck erfolgen, da kein geschlossenes System vorliegt. Schneckenförderer arbeiten für eine effektive Abfüllung zu langsam. Außerdem muss darauf geachtet werden, dass der obere Rand des offenen Sackes nicht innen verschmutzt wird. An dem oberen Rand muss der offene Sack nämlich noch über eine Schweißnaht, eine Klebenaht oder eine sonstige Verbindungsnaht verschlossen werden. Das funktioniert aber nicht immer ausreichend zuverlässig, wenn eine oder beide miteinander zu verbindenden Wandungen an der Nahtstelle z. B. mit insbesondere schweißhemmendem Schüttgut verschmutzt sind.

Wenn der zu verschweißende Wandungsabschnitt vor der Schweißung mit Schüttgutpartikeln verschmutzt wird, kann die Festigkeit einer erzeugten Schweißnaht nämlich erheblich geringer sein als bei sauberen Sackwandungen. Weiterhin leidet die Reproduzierbarkeit der Schweißnähte. Das kann zu Sackdefekten beim Transport führen, wodurch die Umgebung erheblich verschmutzt werden kann.

Oben offene und wasserdichte Säcke können nicht über die Sackwandung nach außen entlüftet werden. Solche offenen Säcke können nur durch die obere Sacköffnung nach oben hin entlüftet werden. Deshalb ist es bei der Füllung von Offensäcken zur effektiven Entlüftung des Sackinneren von Vorteil, wenn der Füllstand in dem offenen Sack während eines möglichst großen Teils des Füllvorgangs möglichst hoch gehalten wird, da dies die Entlüftung beschleunigt. Dabei sollte aber aus den angeführten Gründen eine Benetzung des oberen Sackrandes vermieden werden.

Deshalb ist mit der EP 1 744 984 B1 eine Vorrichtung und ein Verfahren zur Befüllung eines oben offenen Gebindes bekannt geworden, wobei eine Nettowaage als Wägeeinrichtung vorgesehen ist, die oberhalb einer Trichteranordnung vorgesehen ist, die in einen Füllstutzen oberhalb des zu befüllenden Gebindes mündet. Der Füllstutzen ragt in das Gebinde hinein. Eine Verdichtungseinrichtung ist zur Verdichtung des in das Gebinde eingefüllten Produktes vorgesehen. Der Nettowaage ist eine Zwischenkammer nachgeschaltet, die im Produktweg vor dem Gebinde angeordnet ist. Die Zwischenkammer dient zur temporären Aufnahme wenigstens eines Teils des von der Nettowaage abgegebenen Produkts. Die Zwischenkammer ist an der Trichteranordnung angeordnet und umfasst einen Zwischendosierer, um den Volumenstrom über der Zeitdauer des Füllvorgangs so zu steuern, dass ein möglichst hoher Füllstand in dem zu füllenden und oben offenen Gebinde vorliegt, während es gleichzeitig während des Füllvorgangs zu keiner Überfüllung des Gebindes kommt. Eine Überfüllung würde zu einem Rückstau des Produktes in dem oberen Bereich der Sacköffnung führen und so wenigstens die innere Sackwandung mit Produkt kontaminieren, was die spätere Verschließung durch Verschweißen erschwert und die Gefahr von Sackdefekten erheblich erhöht.

Eine solche bekannte Packmaschine arbeitet in der Regel zuverlässig. Der apparative Aufwand ist allerdings hoch. Außerdem kann es bei z. B. schlecht fließenden Schüttgütern zu Anbackungen innerhalb des Produktweges kommen. Backt ein Teil des abzufüllenden Produkts an der Wand an, führt dies bei dem aktuellen Gebinde zu einem Mindergewicht. Löst sich eine Anbackung, weist das nächste Gebinde ein entsprechendes Übergewicht auf. Nachteilig kann außerdem sein, dass bei z. B. einer dennoch erfolgenden Überfüllung sich anhaftendes Produkt nach der Abnahme des Sacks aus dem Produktweg oder von den Wänden lösen und die Umgebung verschmutzen kann.

Es ist deshalb die Aufgabe der vorliegenden Erfindung, eine Packmaschine zum Füllen von offenen Säcken und ein Verfahren zum Füllen von offenen Säcken zur Verfügung zu stellen, welche eine effektive Füllung von offenen Säcken mit insbesondere geringerem Aufwand ermöglichen.

Diese Aufgabe wird gelöst durch eine Packmaschine mit den Merkmalen des Anspruchs 1. Das erfindungsgemäße Verfahren ist Gegenstand des Anspruchs 10. Bevorzugte Weiterbildungen werden in den Unteransprüchen angegeben. Weitere Vorteile und Merkmale der Erfindung ergeben sich aus dem Ausführungsbeispiel und der allgemeinen Beschreibung.

Die erfindungsgemäße Packmaschine dient zum Füllen von offenen Säcken und weist wenigstens einen Füllstutzen mit wenigstens einer Füllöffnung auf. Durch eine relativ zum Füllstutzen gerichtete Aufwärtsbewegung ist ein offener Sack an den Füllstutzen anhängbar. Es ist wenigstens eine Wägeeinrichtung vorgesehen, um eine vordefinierte Menge eines abzufüllenden Produktes abzuwiegen. Eine Volumenstromsteuereinrichtung ist vorgesehen, um während des Füllvorgangs eine Stärke des Volumenstroms in den offenen Sack in Abhängigkeit von der Zeit zu steuern. Die Volumenstromsteuereinrichtung umfasst ein Füllorgan und eine Steuereinrichtung, um während des Füllvorgangs eine Stärke des Volumenstroms in den offenen Sack in Abhängigkeit von der Zeit zu steuern, um die obere Sackwandung des offenen Sacks im Wesentlichen frei von abzufüllendem Produkt zu halten. Das Füllorgan ist als Dosiereinrichtung vorgesehen, um das abzufüllende Produkt aus einem Vorsilo in den offenen Sack zu transportieren. Die Wägeeinrichtung ist als Bruttowaage ausgeführt, um während des Füllvorgangs ein Maß für das in den offenen Sack abgefüllte Gewicht zu bestimmen. Es ist wenigstens eine während des Füllvorgangs betreibbare Verdichtungseinrichtung vorgesehen.

Die Volumenstromsteuereinrichtung steuert insbesondere die Füllgeschwindigkeit.

Die erfindungsgemäße Packmaschine hat viele Vorteile. Die erfindungsgemäße Packmaschine erlaubt mit einem geringeren Aufwand die zuverlässige und effektive Abfüllung von Schüttgütern in offene Säcke bzw. oben offene Gebinde. Dabei wird mit der Volumenstromsteuereinrichtung der Volumenstrom derart dosiert, dass eine effektive Füllung der offenen Säcke ermöglicht wird. Insbesondere wird das Füllorgan mit der Steuereinrichtung derart gesteuert, dass der Füllstand des in den offenen Sack abgefüllten Produktes während des gesamten Füllvorgangs hoch und insbesondere möglichst hoch ist, sodass eine effektive Entlüftung des abzufüllenden Schüttguts ermöglicht wird.

Dadurch, dass die Volumenstromsteuereinrichtung das Füllorgan und eine Steuereinrichtung umfasst und dadurch, dass das Füllorgan als Dosiereinrichtung zum Transport des abzufüllenden Schüttguts aus dem Vorsilo in den offenen Sack dient, wird ein erheblich geringerer technischer Aufwand benötigt als bei der aus dem Stand der Technik bekannten Packmaschine. Bei der bekannten Packmaschine wird eine erste Dosiereinrichtung benötigt, die die abzufüllende Produktmenge in den Behälter der Nettowaage abfüllt. Wenn die Menge des abzufüllenden Produkts in dem Behälter der Nettowaage abgewogen ist und ein zu füllender offener Sack an den Füllstutzen angehangen ist, wird die Dosierklappe geöffnet und das abzufüllende Schüttgut gelangt in die Zwischenkammer. Dort sorgt eine zweite Dosiereinrichtung als Zwischendosierer für eine zeitgesteuerte Stärke des Volumenstroms.

Der Zwischendosierer bei dem bekannten Stand der Technik ermöglicht eine zeitlich gesteuerte Stärke des Volumenstroms, sodass ein Überlauf des zu füllenden offenen Sacks vermieden werden kann. Steigt der Füllstand in dem zu füllenden offenen Sack bis zu dem Füllstutzen oder in den Füllstutzen hinein an, so kann das abzufüllende Schüttgut den oberen Bereich der Sackwandung verschmutzen. Bei dem späteren Verschließen der oberen Sackwandung des offenen Sacks durch Verschweißen oder dergleichen können Produktanhaftungen an der Sackwandung zu einer fehlerhaften Verschlussnaht führen, die zum Austritt von abgefülltem Schüttgut führen kann. Es ist auch möglich, dass bei größeren Belastungen der offene Sack an einer fehlerhaft verschlossenen Verschlussnaht aufplatzt, und so eine Verschmutzung der Umgebung auftritt, die vermieden werden sollte. Das wird bei dem bekannten Stand der Technik dadurch gelöst, dass zwei separate Dosiereinrichtungen und eine Nettowaage vorgesehen sind. Dabei sind die Wägeeinrichtung und die Volumendosiereinrichtung getrennt voneinander.

Die vorliegende Erfindung ermöglicht es hingegen, mit nur einem Füllorgan sowohl die abzufüllende Menge des Schüttguts zu dosieren als auch den Volumenstrom zeitlich zu steuern, sodass einerseits ein hoher Füllstand während des gesamten Füllvorgangs ermöglicht wird, während andererseits nicht das gesamte abzufüllende Schüttgut direkt in den offenen Sack gelangt.

Bei den abzufüllenden Schüttgütern weist das in den Sack gelangende Schüttgut meist durch mitgeförderte Luft ein um wenigstens 20 % höheres Volumen auf. Würde das gesamte Schüttgut im freien Fall direkt in den oben offenen Sack eingeleitet, so würde das Sackvolumen nicht ausreichen, um das gesamte Schüttgut aufzunehmen. Erst nach einer entsprechenden Entlüftung reduziert sich das Volumen des Schüttguts derart, dass es vollständig in den offenen Sack hineinpasst. Deshalb erlaubt die Steuerung des Volumenstroms über der Zeit des Füllvorgangs eine effektive und hier erfindungsgemäß einfache Realisierung einer Volumenstromsteuereinrichtung.

Das Füllorgan kann eine Füllturbine, ein Belüftungssystem oder dergleichen umfassen.

In einer bevorzugten Weiterbildung umfasst das Füllorgan eine Füllturbine, dessen Fördergeschwindigkeit variabel steuerbar ist. In einer einfachen und bevorzugten Ausgestaltung wird die Fördergeschwindigkeit der Füllturbine über eine getaktete Betriebsweise gesteuert. Dabei ist es bevorzugt, dass die Füllturbine periodisch an- und abgeschaltet wird, um die Fördergeschwindigkeit und somit die Stärke des Volumenstroms über der Zeit zu steuern. Es hat sich bei einigen Produkten herausgestellt, dass eine getaktete Betriebsweise der Füllturbine vorteilhaft ist und dass bei einer solchen Betriebsweise besonders wenig Anbackungen innerhalb des Füllweges auftreten. Durch eine geeignete Wahl der Förder- und der Abschaltzeiten kann eine beliebige Stärke des Volumenstroms eingestellt werden.

Vorzugsweise wird der Produktspiegel immer hoch - aber unterhalb der oberen Sackwandung - gehalten. Dadurch erfolgt eine bessere Entlüftung. Außerdem arbeitet eine Verdichtungseinrichtung effektiver.

In einer weiteren Weiterbildung ist es bevorzugt, dass das Füllorgan wenigstens ein Absperrventil umfasst oder aufweist. Das Absperrventil kann insbesondere als Sperrschieber oder Schere oder Quetschventil ausgebildet sein. Beispielsweise kann ein solches Absperrventil zwei- oder mehrstufig ausgebildet sein und den Querschnitt des Füllwegs teilweise oder ganz verschließen, um über die Einstellung des Querschnitts des Füllwegs die Fördergeschwindigkeit des Füllorgans einzustellen und/oder den Füllweg dicht zu verschließen. Dabei ist es möglich, dass beim teilweisen oder vollständigen Absperren des Füllwegs die Füllturbine, die auch als Zellenradschleuse bezeichnet werden kann, in ihrer Drehzahl reduziert oder vollständig abgeschaltet wird.

In allen Ausgestaltungen ist es bevorzugt, dass wenigstens ein Sensor zur Erfassung wenigstens eines Füllstands vorgesehen ist. Der Sensor kann beispielsweise kapazitiv, induktiv oder optisch oder akustisch ausgelegt sein, um das abzufüllende Material und die Füllstandshöhe des abzufüllenden Produkts innerhalb des offenen Sacks zu detektieren. Die Steuereinrichtung steuert in Abhängigkeit von dem Signal des wenigstens einen Sensors den Förderstrom des abzufüllenden Produkts. Das kann durch ein teilweise oder vollständiges Absperren des Füllwegs erfolgen und auch eine Einstellung der Fördergeschwindigkeit der Füllturbine umfassen.

Die Volumenstromsteuereinrichtung ist vorzugsweise dazu eingerichtet und ausgebildet, die Stärke des Volumenstroms in den offenen Sack mehrfach und insbesondere periodisch schwächer und stärker werden zu lassen. Die Volumenstromsteuereinrichtung kann das Füllorgan mehrfach langsamer und wieder schneller ansteuern und/oder einen Weg des abzufüllenden Produkts periodisch mehr und weniger stark verschließen.

In allen Ausgestaltungen ist es besonders bevorzugt, dass die Verdichtungseinrichtung während wenigstens eines Teils und insbesondere während des ganzen Füllvorgangs betrieben wird.

Besonders bevorzugt ist, dass wenigstens eine Verdichtungseinrichtung auf den Boden des zu füllenden und oben offenen Sacks einwirkt. Insbesondere ist auch wenigstens eine Verdichtungseinrichtung vorgesehen, die dazu ausgebildet ist, während des Füllvorgangs von oben in den offenen Sack einzutauchen. Eine solche von oben in den offenen Sack eintauchende Verdichtungseinrichtung kann beispielsweise als Rütteleinrichtung und insbesondere als Rüttelflasche oder Vakuumlanze oder dergleichen ausgeführt sein oder wenigstens eine solche umfassen.

Die von oben in den offenen Sack eintauchende Verdichtungseinrichtung wird insbesondere durch den Füllstutzen hindurch in den offenen Sack eingeführt. Der Füllvorgang wird vorzugsweise derart gesteuert, dass der zur Verdichtung eingesetzte Teil der Verdichtungseinrichtung, wie beispielsweise die Rüttelflasche, wenigstens im Wesentlichen während des Füllvorgangs von dem einzufüllenden Produkt bedeckt ist, um eine möglichst große Effektivität zu gewährleisten.

Es hat sich erstaunlicherweise herausgestellt, dass der Betrieb der Verdichtungseinrichtung während des Füllvorgangs keine negativen Auswirkungen auf das Füllergebnis hat. Die hier im Brutto-Wägeverfahren arbeitende Wägeeinrichtung wiegt den Füllstutzen, die Verdichtungseinrichtung, das die Verdichtungseinrichtung und den Füllstutzen haltende Gestell und den zu füllenden offenen Sack mit dem gegebenenfalls schon darin vorhandenen Produkt.

Auch eine als Vibrations- oder Rütteleinrichtung ausgebildete Verdichtungseinrichtung, die mit hoher Frequenz schwingt, wirkt sich nicht nachteilig auf das Messergebnis der Wägeeinrichtung aus, wenn ein geeigneter Filter die Messwerte filtert. Beispielsweise kann eine Ermittlung der Messwerte über einen gleitenden Mittelwert erfolgen oder es kann die theoretisch zu erwartende Gewichtskurve durch die zeitlich gemessene Gewichtskurve gelegt werden. Darüber ist eine effektive und ausreichend genaue Steuerung des Füllvorgangs, auch und sogar bei ständig aktivierter Verdichtungseinrichtung, möglich.

In allen Ausgestaltungen ist das Füllorgan in, an oder in unmittelbarer Nähe des Vorsilos angeordnet. Es ist möglich, dass die Packmaschine als rotierende Packmaschine ausgeführt ist und mehrere Füllstutzen aufweist, die mitrotierend an der Packmaschine angeordnet sind. Insbesondere ist die Packmaschine als kontinuierlich rotierende Packmaschine ausgeführt. Dadurch wird es möglich, der Packmaschine eine Sackbildungseinrichtung vorzuschalten und gegebenenfalls eine Verschließeinrichtung der Packmaschine nachzuschalten, die die zu füllenden offenen Säcke an die Füllstutzen der Packmaschine anhängen und die gefüllten offenen Säcke mit einer Verschließnaht verschließen.

Die Anordnung des Füllorgans in dem Vorsilo hat u.a. den Vorteil, dass bei einer rotierenden Packmaschine in das Vorsilo ein Vorrat weiteren Produkts auch während des Betriebs eingefüllt werden kann. Wird hingegen eine Nettowaage vorgesehen, die das abzufüllende Produkt zunächst mit einer ersten Dosiereinrichtung dosiert, um anschließend das abgemessene Schüttgut einem Zwischendosierer zuzuführen, so wird bei einer rotierenden Anlage die Abfüllung in die Nettowaage nur möglich, wenn darüber ein Vorsilo mitrotierend angeordnet ist oder wenn sich die Nettowaage gerade an einer vorbestimmten Winkelstelle befindet und die Anlage getaktet rotierend betrieben wird.

Die hier bevorzugte Lösung erlaubt den Einsatz eines Vorsilos, welches sogar während eines Füllvorgangs wieder befüllt werden kann. Die Befüllung des Vorsilos ist unabhängig von dem Füllvorgang eines offenen Sacks, da die Dosierung während des Füllvorgangs selbst erfolgt. Dadurch kann sich bei einer beispielsweise rotierenden Anlage das Vorsilo in einem zentralen Bereich befinden, welches von oben offen ausgeführt ist und in welches von oben Material eingefüllt werden kann.

Die gerichtete Aufwärtsbewegung zum Anhängen eines offenen Sacks an einen Füllstutzen kann dabei durch eine Aufwärtsbewegung des offenen Sacks an den Füllstutzen realisiert werden, wobei der offene Sack durch eine - absolut gesehen - gerichtete Aufwärtsbewegung des offenen Sacks an den Füllstutzen angehangen wird. Es ist aber auch möglich, dass der Füllstutzen zum Anhängen nach unten verfahren wird und in den geöffneten, bereitgehaltenen offenen Sack eintaucht, um den offenen Sack aufzunehmen. Auch eine solche Bewegung ist relativ zum Füllstutzen eine Aufwärtsbewegung des offenen Sacks. Möglich ist es auch, dass der Füllstutzen nach unten und der offene Sack nach oben bewegt werden, um den offenen Sack anzuhängen.

Das erfindungsgemäße Verfahren dient zum Füllen von offenen Säcken mit einer Packmaschine, wobei ein offener Sack durch eine relativ zu einem Füllstutzen gerichtete Aufwärtsbewegung an dem Füllstutzen angehangen wird. Es ist eine Wägeeinrichtung vorgesehen, die eine vordefinierte Menge des abzufüllenden Produktes abwiegen. Eine mit der Wägeeinrichtung zusammenarbeitende Volumenstromsteuereinrichtung ist vorgesehen, um während des Füllvorgangs eine Stärke des Volumenstroms in den offenen Sack in Abhängigkeit von der Zeit zu steuern. Dabei umfasst die Volumenstromsteuereinrichtung ein Füllorgan und eine Steuereinrichtung und steuert während des Füllvorgangs eine Stärke des Volumenstroms in den offenen Sack in Abhängigkeit von der Zeit, um die obere Sackwandung des offenen Sacks im Wesentlichen frei von abzufüllendem Produktes zu halten. Das Füllorgan transportiert als Dosiereinrichtung das abzufüllende Produkt aus einem Vorsilo in den offenen Sack. Die Wägeeinrichtung ist als Bruttowaage ausgeführt und bestimmt während des Füllvorganges ein Maß für das in den offenen Sack abgefüllte Gewicht. Es wird wenigstens zeitweise wenigstens eine Verdichtungseinrichtung während des Füllvorgangs betrieben.

Auch das erfindungsgemäße Verfahren hat viele Vorteile, da eine definierte Füllung des offenen Sacks ermöglicht wird. Über einen möglichst großen Zeitraum des Füllvorgangs bleibt der Füllstand möglichst hoch ohne die obere Sackwandung zu verschmutzen. Das Verfahren erlaubt eine kostengünstige und technisch unaufwendige Realisierung eines Füllverfahrens, wobei eine hohe Genauigkeit mit geringem Aufwand ermöglicht wird.

Vorzugsweise wird während des Füllvorgangs ein Füllstand erfasst und die Produktabfüllung wird in Abhängigkeit von dem Füllstand gesteuert. Dadurch wird es möglich, dass der Füllstand des abzufüllenden Produkts während des Füllvorgangs hoch gehalten wird, während gleichzeitig ein Überlauf und/oder eine Verschmutzung der oberen Sackwandung sicher vermieden wird.

Insbesondere wird das Füllorgan getaktet betrieben und insbesondere periodisch ein- und ausgeschaltet. Vorzugsweise wird ein Füllweg durch das Füllorgan periodisch verkleinert und vergrößert. Dabei ist es möglich, dass der Füllweg teilweise oder vollständig verschließbar ist.

In allen Ausgestaltungen ist es bevorzugt, dass die Füllgeschwindigkeit des Füllvorgangs variabel gesteuert wird. Das kann über ein Ein- und Ausschalten einer Füllturbine erfolgen, kann aber auch über eine Steuerung der Drehzahl der Füllturbine realisiert werden.

Weitere Vorteile und Merkmale der vorliegenden Erfindung ergeben sich aus dem Ausführungsbeispiel, welches im Folgenden mit Bezug auf die beiliegenden Figuren erläutert wird.

In den Figuren zeigen:
- Fig. 1: schematische Draufsicht auf eine erfindungsgemäße Packmaschine;

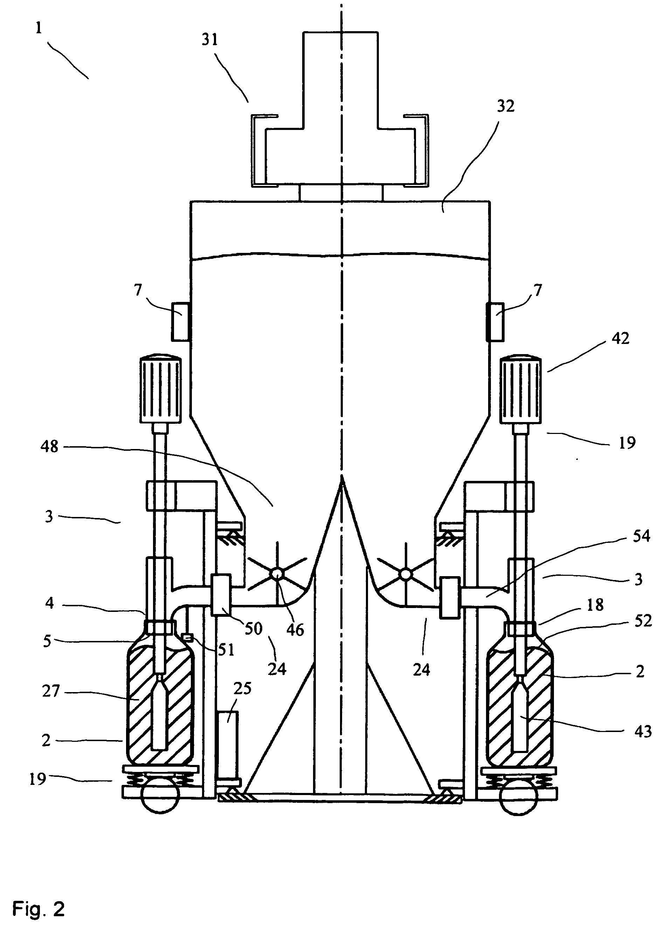

- Fig. 2: eine Seitenansicht der Packmaschine nach Fig. 1;
- Fig. 3: den Gewichtsverlauf und den Füllstandsverlauf eines offenen Sacks während des Füllvorgangs;
- Fig. 4: die Fördergeschwindigkeit des Förderorgans während des in Fig. 3 dargestellten Füllvorgangs; und

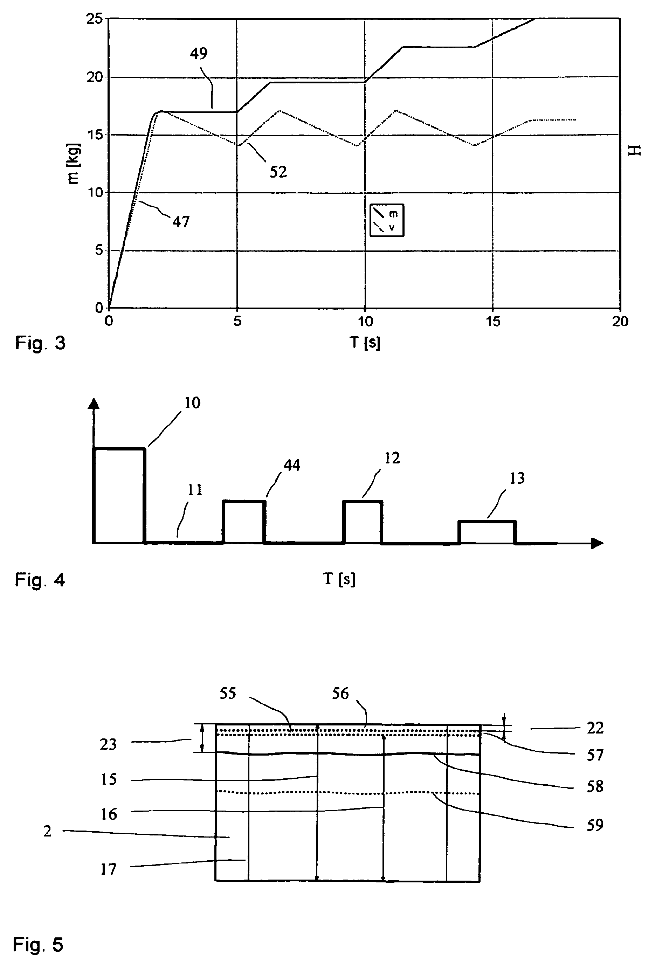

- Fig. 4: eine stark schematische Darstellung eines offenen Sacks.

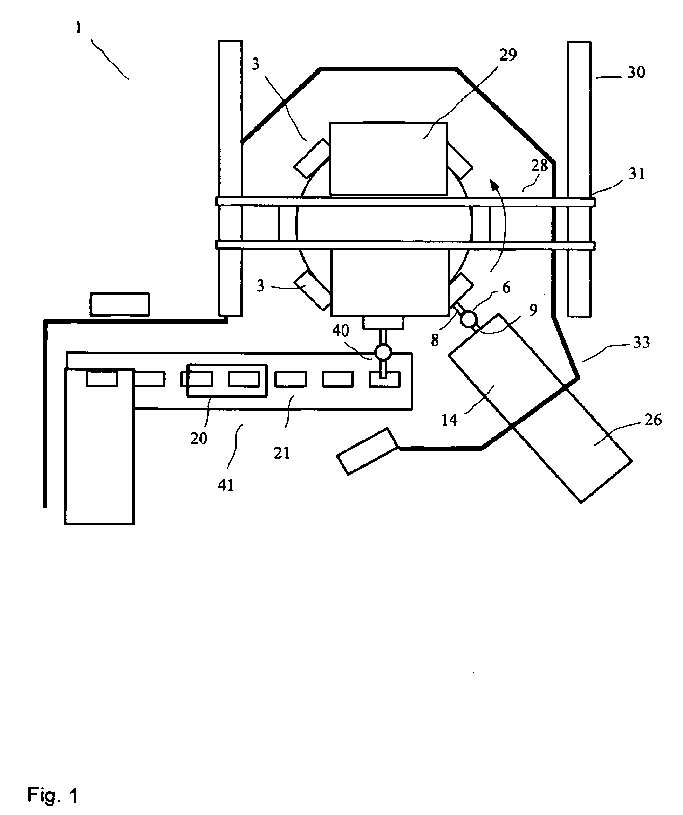

Mit Bezug auf die beiliegenden Figuren wird im Folgenden ein Ausführungsbeispiel einer erfindungsgemäßen rotierbaren Packmaschine 1 erläutert, welche in Fig. 1 in einer schematischen Draufsicht abgebildet ist. Die rotierbare Packmaschine 1 dient zum Füllen von offenen Säcken 2 und verfügt über eine Mehrzahl von Fülleinheiten 3, die hier jeweils mit einem Füllstutzen 4 ausgerüstet sind. An der hier dargestellten Packmaschine 1 können zwischen etwa zwei und sechzehn Fülleinheiten 3 angeordnet werden. Grundsätzlich ist es aber auch möglich, noch mehr Fülleinheiten an einer rotierbaren Packmaschine 1 anzubauen. Die Packmaschine kann auch als feststehende Einzelstutzen-Packmaschine ausgeführt sein.

Die rotierbare Packmaschine 1 wird hier kontinuierlich rotierend betrieben, sodass die Fülleinheiten 3 mit im wesentlichen konstanter Geschwindigkeit um eine zentrale Achse drehen. Die Geschwindigkeit hängt insbesondere von dem abzufüllenden Produkt und dessen Verdichtungsverhalten ab. Das abzufüllende Material wird über einen Einlauftrichter 29 und ein Silo 32 den einzelnen Füllstutzen 4 der Fülleinheiten 3 zugeführt. Das Silo 32 kann für jeden Füllstutzen 4 bzw. jede Fülleinheit 3 ein separates Vorsilo 48 aufweisen, sodass jedem Füllstutzen 4 ein separater Zwischenbunker zugeordnet ist. Bei einer Einstutzenmaschine entspricht das Silo 32 dem Vorsilo 48.

Die Füllstutzen 4 zur Befüllung der offenen Säcke 2 sind hier vertikal ausgerichtet, sodass die Füllöffnung 5 senkrecht nach unten zeigt. Es ist aber auch möglich, dass die Füllöffnung zur Senkrechten geneigt ausgerichtet ist. Beispielsweise kann ein Winkel von fünf Grad, zehn Grad oder auch zwanzig Grad zur Senkrechten vorgesehen sein. Offene Säcke 2, die auch als Offensäcke 2 bezeichnet werden, werden von unten an die untere Füllöffnung 5 der Füllstutzen 4 angehängt.

Dazu wird ein offener Sack 2 ergriffen und die obere Sackwandung 18 geöffnet, sodass die obere Sacköffnung entsteht. Es werden vorzugsweise Sauger und Greifer verwendet, sodass eine der Querschnittsform des Füllstutzens 4 entsprechende Sacköffnung an dem oberen Ende des Offensacks 2 entsteht. Der offene Sack 2 wird mit seiner oberen Sackwandung 18 durch diese definiert gehalten, bis der offene Sack 2 auf den Füllstutzen 4 aufgeschoben ist und dort durch hier nicht dargestellte Greifer wiederum definiert gehalten wird.

Das Aufstecken der offenen Säcke 2 erfolgt mit einer Übergabeeinrichtung 6, die einer Sackbildungseinrichtung 26 nachgeschaltet ist. In der Sackbildungseinrichtung 26 werden hier aus einer Schlauchfolie die einzelnen Offensäcke 2 während des kontinuierlichen Betriebs hergestellt. Dazu wird von der Schlauchfolie jeweils eine entsprechende Länge 15 abgeschnitten und die Bodennaht in den Offensack 2 eingefügt. Es können aber auch vorgefertigte offene Säcke 2 verwendet werden. Während der Rotation, die hier entgegen dem Uhrzeigersinn erfolgt, werden die offenen Säcke 2 gefüllt. Bei anderen Anlagenkonfigurationen ist eine Rotation im Uhrzeigersinn möglich. Während der Rotation erfolgt der Füllvorgang. Gleichzeitig wird über die Verdichtungseinrichtungen 19, die an jeder Fülleinheit 3 höhenverstellbar vorgesehen sind, eine Verdichtung des Produktes erzielt, wodurch der Produktspiegel reduziert wird. Durch die Verdichtung des Produkts werden insgesamt kürzere offene Säcke 2 benötigt und es wird ein prall gefüllter offener Sack 2 hergestellt, der nicht nur wenig Folienmaterial benötigt, sondern auch optisch ansprechend aussieht.

Die zur Herstellung der offenen Säcke 2 - im Vergleich zu Säcken aus Papier - verwendete Folie führt dazu, dass die offenen Säcke 2 eine relativ geringe Eigensteifigkeit aufweisen. Damit wird jederzeit eine genau definierte Führung der offenen Säcke 2 gewährleistet, um relativ geringe Sacklängen und geringe Sacküberstände 22 sowie einen sicheren Betrieb zu ermöglichen.

Wenn der offene Sack 2 mit der vorgesehenen Menge gefüllt ist und die Winkelposition der Abnahmeeinrichtung 40 erreicht, wird der offene Sack 2 von dem Füllstutzen 4 abgenommen. Die Abnahme des offenen Sacks 2 von dem Füllstutzen erfolgt hier während der kontinuierlichen Drehung der Packmaschine 1. Der abgenommene Sack 2 wird durch die Abnahmeeinrichtung 40, die ebenfalls rotierbar ausgeführt ist, an die Verarbeitungseinrichtung 41 übergeben, die eine Linearführung 21 und eine oder mehrere Verschließeinrichtungen 20 umfasst. Durch die wenigstens eine Verschließeinrichtung 20 wird das oben offene Ende des Offensacks 2 verschlossen. Auch bei der Abnahme wird jederzeit gewährleistet, dass der offene Sack 2 zu jedem Zeitpunkt definiert gehalten und geführt wird, sodass ein definierter Verschluss der Offensäcke 2 gewährleistet werden kann.

Ein Schutzzaun 33 kann vorgesehen sein, damit ein Betreten des Gefahrenbereichs verhindert wird.

Die rotierbare Packmaschine 1 wird bevorzugt an einem Gestell 30 hängend gelagert, wobei Träger 31 die rotierbare Packmaschine halten. Im oberen Bereich des rotierenden Teils kann ein Silo 32 zur Zwischenlagerung von Produkt vorgesehen sein.

An jeder Fülleinheit 3 sind hier im Ausführungsbeispiel zwei separate Verdichtungseinrichtungen 19 vorgesehen. Eine Verdichtungseinrichtung 19 ist am unteren Ende der Fülleinheit 3 vorgesehen. Der Sackboden des zu füllenden offenen Sacks 2 steht wenigstens während eines Teils des Füllvorgangs auf der Verdichtungseinrichtung 19 auf, die hier als Rütteleinrichtung ausgeführt ist und die Schwingungen in vertikaler Richtung auf den zu füllenden offenen Sack 2 aufbringt, um das Produkt 27 im Inneren des offenen Sacks 2 während des Füllvorgangs zu verdichten und das Produkt 27 zu entlüften.

Des Weiteren ist eine weitere Verdichtungseinrichtung 19 vorgesehen, die ebenfalls Vibrationen in das abgefüllte Schüttgut einbringt. Diese Verdichtungseinrichtung 19 umfasst einen Antrieb 42 und eine hier ebenfalls über Vibrationsbewegungen wirkende Rüttelflasche 43, die während des Füllvorgangs in das Innere des zu füllenden offenen Sackes 2 von oben eintaucht. Dazu weist der Füllstutzen 4 eine Durchgangsöffnung auf, durch die die Rüttelflasche 43 von oben in den zu füllenden offenen Sack 2 eintauchen kann.

Vorzugsweise taucht die Rüttelflasche 27 nach dem Anhängen des zu füllenden offenen Sacks 2 von oben durch den Füllstutzen 4 in den geöffneten offenen Sack 2 ein. Nach beendetem Füllvorgang wird die Rüttelflasche 27 nach oben herausgezogen.

Es ist auch möglich, das ein zu füllender offener Sack 2 von unten an den Füllstutzen 4 angehangen wird, während sich die Rüttelflasche schon durch den Füllstutzen nach unten erstreckt, wenn eine geeignete Anhängemechanik für den zu füllenden offenen Sack 2 vorhanden ist.

Während des Füllvorgangs wird kontinuierlich oder in periodischen Abständen ein Maß für das Gewicht des bislang abgefüllten Produkts 27 ermittelt. Dazu ist eine Wägeeinrichtung 25 vorgesehen, die hier als Bruttowaage ausgeführt ist und die das Gewicht des Füllstutzens und der unteren und der oberen Verdichtungseinrichtungen 19, sowie das Gewicht des Sacks und des eingefüllten Produkts 27 und das Gewicht des Haltegestells erfasst, an dem die Verdichtungseinrichtungen 19 und der Füllstutzen 4 angebracht sind. Da das Einzelgewicht der beteiligten Komponenten jeweils bekannt ist, kann aus dem gemessenen Gesamtgewicht der Wägeeinrichtung 25, auf das Gewicht des abgefüllten Schüttguts bzw. Produkts 27 zurückgeschlossen werden.

Mit dem Messergebnis für das aktuelle Gewicht kann das Füllorgan 24 als Dosiereinrichtung entsprechend gesteuert werden, um eine genau definierte Menge an Schüttgut in den zu füllenden offenen Sack 2 einzubringen.

Das Füllorgan 24 umfasst hier eine Füllturbine 46 und ein im Produktweg danach angeordnetes Sperrventil 50, welches beispielsweise als Schieberventil oder Quetschventil ausgeführt sein kann. Das Absperrventil 50 ist insbesondere in einem elastischen Bereich des Füllwegs 54 vorgesehen, der an der Trennstelle zwischen dem gewogenen System zu dem Vorsilo 48 angeordnet ist. Dadurch wird eine Entkoppelung des gewogenen Systems erreicht. Der dort vorzugsweise durch einen elastischen Schlauch gebildete Füllweg 54 kann durch ein Scherenventil oder dergleichen abgequetscht werden, um den Füllweg 54 zu verschließen. Alternativ oder ergänzend dazu kann die Füllturbine 46 in ihrer Drehzahl reduziert oder vollständig abgeschaltet werden.

Des Weiteren kann ein Sensor 51 vorgesehen sein, der während des Füllvorgangs außerhalb des offenen Sacks 2 oder auch innerhalb des offenen Sacks 2 angeordnet sein kann, um einen Füllstand 52 während des Füllvorgangs zu ermitteln. Beispielsweise kann der Sensor 51 kapazitiv oder induktiv arbeiten oder über beispielsweise ein Ultraschallverfahren oder ein optisches Verfahren den Füllstand 52 während des Füllvorgangs ermitteln.

Über eine Steuereinrichtung 7, die jeweils einer Fülleinheit 3 zugeordnet sein kann oder aber zentral die Steuerung für alle Fülleinheiten 3 übernimmt, kann mittels der jeweils ermittelten Füllstandswerte 52 die Dosiereinrichtung bzw. das Füllorgan 24 so gesteuert werden, dass der Füllstand 52 möglichst hoch ist und gleichzeitig nicht bis zum Füllstutzen 4 reicht, sodass eine Verschmutzung des oberen Randes der Sackwandung 18 zuverlässig vermieden wird.

Dadurch kann einerseits eine möglichst effektive und schnelle Füllung gewährleistet werden, während andererseits der obere Rand der Sackwandung 18 sauber bleibt und eine dauerhaft feste Verschlussnaht nach dem Füllvorgang gewährleistet werden kann.

Es ist auch möglich, ohne einen Sensor 51 in entsprechender Weise den Füllvorgang zu steuern. Dadurch wird beispielsweise auf Erfahrungsdaten zurückgegriffen und der Füllvorgang für ein abzufüllendes Produkt über Versuche experimentell so ermittelt, dass ein optimaler Verlauf des Füllstands ermöglicht wird.

Zur Steuerung des Volumenstroms wird eine Volumenstromsteuereinrichtung 45 eingesetzt, die hier aus der Steuereinrichtung 7 und dem Füllorgan 24 besteht.

Fig. 3 zeigt den typischen Gewichtsverlauf und den Füllstandsverlauf bei einem Füllvorgang.

Der gesamte Füllvorgang benötigt hier etwa 17 Sekunden. Abgefüllt werden in diesem Beispiel 25 kg Schüttgut. Beim Starten des Füllvorgangs wird das Füllorgan vorzugsweise mit maximaler Fördergeschwindigkeit betrieben, um einen hohen Volumenstrom zu Beginn des Füllvorgangs in den zu füllenden offenen Sack hinein gelangen zu lassen. Der Volumenstrom 47 ergibt sich aus der Steigung des Gewichts 49 über der Zeit T. Wenn der Füllstand bzw. die Höhe H ein vorgesehenes Maß 58 erreicht, welches entweder empirisch ermittelt wurde oder aber durch einen Sensor 51 detektiert wird, wird die Fördergeschwindigkeit 44 des Füllorgans 24 reduziert oder aber sogar abgeschaltet.

Die Fördergeschwindigkeit 44 des Füllorgans 24 ist für den Füllvorgang nach Figur 3 in Figur 4 über der Zeit T dargestellt.

Zu Beginn des Füllvorgangs wird mit maximaler Fördergeschwindigkeit 10 das abzufüllende Produkt 27 in den zu füllenden offenen Sack 2 hineingefördert. Beispielsweise kann die Drehzahl einer Füllturbine 46 zu Beginn des Füllvorgangs besonders hoch gewählt werden.

Nach Erreichen der vorgesehenen maximalen Füllstandshöhe 58 wird die Fördergeschwindigkeit 44 reduziert, wozu beispielsweise die Füllturbine abgeschaltet wird. Die Fördergeschwindigkeit 11 in dem nachfolgenden Zeitintervall sinkt folglich auf Null. Wenn der Produktspiegel durch die gleichzeitig erfolgende Verdichtung durch die Verdichtungseinrichtung 19 auf ein vorbestimmtes Maß 59 abgesunken ist, wird die Füllturbine 46 wieder eingeschaltet und beispielsweise mit einer geringeren Fördergeschwindigkeit 12 betrieben, bis der Füllstand 52 wieder das vorgesehene maximale Niveau 58 erreicht hat.

Es schließt sich eine Beruhigungsphase an, in der die Füllturbine wieder abgeschaltet bleibt. Durch die gleichzeitig erfolgende Verdichtung, die auch schon durch ein natürliches Ausgasen erfolgt und durch die Verdichtungseinrichtungen 19 erheblich verstärkt wird, reduziert sich das Volumen des Schüttguts über der Zeit. Schließlich wird die Füllturbine 46 bei dem Pegelstand 59 erneut eingeschaltet und mit der Fördergeschwindigkeit 12 wird wieder Produkt in den zu füllenden offenen Sack 2 eingefüllt. Dabei steigt das Gewicht des abgefüllten Produkts 27 zu den Betriebszeitpunkten der Füllturbine 46 entsprechend an.

Gegen Ende des Füllvorgangs, wenn das abzufüllende Gewicht nahezu schon erreicht ist und beispielsweise nur noch 10 % des abzufüllenden Gewichts fehlen, kann die Fördergeschwindigkeit 44 der Füllturbine 46 noch weiter reduziert werden und beispielsweise nur noch mit halber Drehzahl gefördert werden. Diese Fördergeschwindigkeit 13 ergibt sich gegen Ende des Füllvorgangs, sodass die Gewichtssteigung über der Zeit während der Fördergeschwindigkeit 13 entsprechend geringer ist, bis das vorgesehene Gesamtgewicht erreicht wird.

Selbstverständlich können nicht nur vier Förderintervalle vorhanden sein, wie es in den Figuren 3 und 4 abgebildet ist, sondern es können auch 5, 6 oder mehr Förderintervalle oder auch weniger - beispielsweise 2 oder 3 Förderintervalle - vorgesehen sein, bis der offene Sack 2 gefüllt ist. Die Anzahl und Art der Intervalle hängt insbesondere von dem abzufüllenden Produkt und auch von der Gebindegröße ab.

In anderen Ausgestaltungen ist es auch möglich, dass die Fördergeschwindigkeit 44 des Füllorgans 24 kontinuierlich variierend betrieben wird, sodass sich ab Erreichen des maximal vorgesehenen Füllstands keine weitere Volumenzunahme, sondern lediglich - entsprechend abhängig von der fortschreitenden Verdichtung des Produkts - eine Gewichtszunahme bis zum Erreichen des vordefinierten Gewichts erfolgt.

Es ist möglich, das die reduzierte Fördergeschwindigkeit 13 gemäß Figur 4 durch eine Reduktion der Drehzahl der Füllturbine 46 erreicht wird. Möglich ist es aber auch, dass eine Reduktion der Fördergeschwindigkeit 13 durch ein teilweises Schließen des Füllweges 54 mittels des Absperrventils 50 erreicht wird.

Figur 5 zeigt stark schematisch und nicht maßstäblich einen offenen Sack 2. Der offene Sack 2 wird nach beendetem Füllvorgang mit einer hier gestrichelt eingezeichneten Verbindungsnaht oder Schweißnaht 55 verschlossen. Der Sack 2 weist eine Länge 15 auf. Ein möglichst geringer Abstand 22 bleibt nach dem Verschließen zwischen der Schweißnaht 55 und dem oberen Ende der Sackwandung übrig, um Sackmaterial einzusparen. Der offene Sack 2 kann Seitenfalten 17 aufweisen.

Beim Füllvorgang gelangt von oben Schüttgut in den offenen Sack 2 hinein, wobei beim Füllen darauf geachtet wird, dass ein oberer maximaler und hier nicht maßstäblich eingezeichneter Füllstand 58 nicht überschritten wird.

Beim Erreichen des maximalen Füllstandes 58 wird der Füllvorgang verlangsamt oder gestoppt, während gleichzeitig eine Verdichtungseinrichtung aktiviert wird oder weiter läuft. Dadurch und auch durch natürliche Entlüftung wird der offene Sack 2 nach oben hin entlüftet, sodass der Füllstand im Sack 2 absinkt und schließlich den Füllstand 59 erreicht. Dann wird der Volumenstrom in den offenen Sack 2 wieder durch die Volumenstromsteuereinrichtung erhöht, bis der maximale Füllstand 58 wieder erreicht wird. Anschließend wird mit der Volumenstromsteuereinrichtung der Volumenstrom wieder verringert oder abgestellt, sodass sich der Füllstand wieder verringert. Danach wird bei Erreichen des Füllstandes 59 der Volumenstrom in den offenen Sack 2 hinein wieder erhöht. Dieser Vorgang wird fortgesetzt, bis das vorgesehene Endgewicht erreicht wird. Dabei können die Füllhöhen 58 und 59 variabel an den bisherigen Füllvorgang und Füllstand angepasst werden.

Bei dem maximalen Füllstand 58 liegt noch ein freier aber möglichst geringer Abstand 23 zum oberen Rand des Sackes 2 vor. Die Maße und Abstände sind in Fig. 5 nur schematisch dargestellt, um das Prinzip zu zeigen. Es wird mit der Volumenstromsteuereinrichtung dafür gesorgt, dass während des Füllvorganges ein Abstand 23 eingehalten wird, damit eine Verschmutzung des Bereiches der oberen Sackwandung vermieden wird. Dadurch wird sicher gestellt, dass der Bereich, wo die Schweiß- oder Verbindungsnaht 57 in die Sackwandung eingebracht werden muss, sauber bleibt. Durch eine erhebliche Verschmutzung der Wandung mit Partikeln des abzufüllenden Schüttgutes könnte die dort produzierte Schweißnaht erheblich weniger belastbar werden als bei der Verschweißung einer sauberen Sackwandung.

Durch die Erfindung wird ein einfacher Aufbau ermöglicht, der eine präzise Abfüllung von Schüttgütern in offene Säcke 2 mit hoher Geschwindigkeit und Zuverlässigkeit ermöglicht. Dadurch, dass das Füllorgan nicht nur zur Steuerung des abzufüllenden Gewichts als Dosiereinrichtung eingesetzt wird, sondern auch zur Steuerung der Fördergeschwindigkeit kann gegenüber Anlagen aus dem Stand der Technik die Bauhöhe massiv verringert werden. Ein Zwischenspeicher ist nicht nötig, sodass die Bauhöhe gegebenenfalls sogar halbiert werden kann, was erhebliche Kosten auch an der umgebenden Anlage einspart, da der umbaute Raum erheblich kleiner gewählt werden kann.

Durch die verringerte Bauhöhe wird auch der Weg reduziert, den das Produkt im freien Fall während des Füllvorgangs zurücklegt. Dadurch wird auch der Anteil der Luft reduziert, den das Schüttgut mit in den offenen Sack 2 hinein transportiert. Versuche haben gezeigt, dass der Luftanteil um 10, 20 oder sogar 30% reduziert werden kann, wodurch eine geringere Verdichtungszeit benötigt wird. Das führt wiederum zu einer erheblich effektiveren und schnelleren Befüllung.

Dadurch wird mit der erfindungsgemäßen Packmaschine eine höhere Abfüllrate ermöglicht, während gleichzeitig der Aufwand sinkt.

Außerdem kann durch den kürzeren Produktweg während des Füllvorgangs das Anbacken von Produkt besser vermieden werden. Durch die effektivere Abfüllung ist es auch möglich, schwer fließende Produkte abzufüllen, die mit den Packmaschinen aus dem Stand der Technik nicht oder nur schwer oder nur mit Zusatzmaßnahmen abgefüllt werden konnten.

**Bezugszeichenliste:**

| | | | |
|---|---|---|---|
| 1 | Packmaschine | 27 | Produkt |
| 2 | offener Sack | 28 | Drehrichtung |
| 3 | Fülleinheit | 29 | Einlauftrichter |
| 4 | Füllstutzen | 30 | Gestell |
| 5 | Füllöffnung | 31 | Träger |
| 6 | Übergabeeinrichtung | 32 | Silo |
| 7 | Steuereinrichtung | 33 | Schutzzaun |
| 8 | Greifarm | 40 | Abnahmeeinrichtung |
| 9 | Greifarm | 41 | Verarbeitungseinrichtung |
| 10 | Fördergeschwindigkeit | 42 | Antrieb |
| 11 | Fördergeschwindigkeit | 43 | Rüttelflasche |
| 12 | Fördergeschwindigkeit | 44 | Fördergeschwindigkeit |
| 13 | Fördergeschwindigkeit | 45 | Volumenstromsteuereinrichtung |
| 14 | Sackanreicheinheit | | |
| 15 | Sacklänge | 46 | Füllturbine |
| 16 | Höhe | 47 | Volumenstrom |
| 17 | Seitenfalte | 48 | Vorsilo |
| 18 | Sackwandung | 49 | Gewicht |
| 19 | Verdichtungseinrichtung | 50 | Absperrventil |
| 20 | Verschließeinrichtung | 51 | Sensor |
| 21 | Linearführung | 52 | Füllstand |
| 22 | Überstand | 54 | Füllweg |
| 23 | Abstand | 55 | Schweißnaht |
| 24 | Dosiereinrichtung, Füllorgan | 56 | obere Sackwandung |
| | | 57 | Breite der Schweißnaht |
| 25 | Wägeeinrichtung | 58 | maximale Füllhöhe |
| 26 | Sackbildungseinrichtung | 59 | Füllstand |

## Patentansprüche

1. Packmaschine (1) zum Füllen von offenen Säcken (2) mit wenigstens einem Füllstutzen (4) mit wenigstens einer Füllöffnung (5), wobei durch eine relativ zum Füllstutzen (4) gerichtete Aufwärtsbewegung ein offener Sack (2) an den Füllstutzen (4) anhängbar ist,
wobei eeine Wägeeinrichtung (25) vorgesehen ist, um eine vordefinierte Menge eines abzufüllenden Produktes (27) abzuwiegen,
und wobei eine Volumenstromsteuereinrichtung (45) vorgesehen ist, um während des Füllvorgangs eine Stärke des Volumenstroms (47) in den offenen Sack (2) zu steuern,
**dadurch gekennzeichnet,**
**dass** die Volumenstromsteuereinrichtung (45) ein Füllorgan (46) und eine Steuereinrichtung (7) umfasst, um während des Füllvorgangs eine Stärke des Volumenstroms (47) in den offenen Sack (2) in Abhängigkeit sowohl einer Gewichtszunahme als auch eines Füllstandes zu steuern, um die obere Sackwandung des offenen Sacks im Wesentlichen frei von abzufüllendem Produkt zu halten, und dass das Füllorgan (46) als Dosiereinrichtung (24) zum Transport des abzufüllenden Produktes aus einem Vorsilo (48) in den offenen Sack (2) vorgesehen ist, und dass die Wägeeinrichtung (25) als Bruttowaage ausgeführt ist, um während des Füllvorgangs ein Maß für das in den offenen Sack (2) abgefüllte Gewicht (49) zu bestimmen, und wobei wenigstens eine während des Füllvorgangs betreibbare Verdichtungseinrichtung (19) vorgesehen ist.

2. Packmaschine (1) nach Anspruch 1, wobei das Füllorgan (46) eine Füllturbine umfasst, dessen Fördergeschwindigkeit variabel steuerbar ist.

3. Packmaschine (1) nach Anspruch 1 oder 2, wobei das Füllorgan (46) ein Absperrventil (50) umfasst, welches insbesondere einen Sperrschieber oder ein Quetschventil umfasst.

4. Packmaschine (1) nach einem der vorhergehenden Ansprüche, wobei wenigstens ein Sensor (51) zur Erfassung eines Füllstands (52) vorgesehen ist.

5. Packmaschine (1) nach einem der vorhergehenden Ansprüche, wobei die Volumenstromsteuereinrichtung (45) dazu eingerichtet und ausgebildet ist, die Stärke des Volumenstroms (47) in den offenen Sack (2) mehrfach periodisch schwächer und stärker werden zu lassen.

6. Packmaschine (1) nach dem vorhergehenden Anspruch, wobei wenigstens eine Verdichtungseinrichtung (19) als Rütteleinrichtung vorgesehen ist, welche dazu ausgebildet ist, während des Füllvorgangs von oben in den offenen Sack (2) einzutauchen.

7. Packmaschine (1) nach einem der vorhergehenden Ansprüche, wobei das Füllorgan (46) in dem Vorsilo (48) angeordnet ist.

8. Packmaschine (1) nach einem der vorhergehenden Ansprüche, welche rotierend ausgeführt ist und an welcher mehrere Füllstutzen (4) mitrotierend angeordnet sind.

9. Packmaschine (1) nach einem der vorhergehenden Ansprüche, wobei dem Vorsilo (48) während des Füllvorgangs ein Vorrat weiteren Produktes zuführbar ist.

10. Verfahren zum Füllen von offenen Säcken (2) mit einer Packmaschine (1), wobei ein offener Sack (2) durch eine relativ zu einem Füllstutzen (4) gerichtete Aufwärtsbewegung an den Füllstutzen (4) angehangen wird, wobei eine Wägeeinrichtung (25) vorgesehen ist, um eine vordefinierte Menge eines abzufüllenden Produktes (27) abzuwiegen,
und wobei eine Volumenstromsteuereinrichtung (45) vorgesehen ist, um während des Füllvorgangs eine Stärke des Volumenstroms (47) in den offenen Sack (2) zu steuern,
**dadurch gekennzeichnet,**
**dass** die Volumenstromsteuereinrichtung (45) ein Füllorgan (46) und eine Steuereinrichtung (7) umfasst und während des Füllvorgangs eine Stärke des Volumenstroms (47) in den offenen Sack (2) in Abhängigkeit von dem Füllvorgang steuert, um die obere Sackwandung des offenen Sacks im Wesentlichen frei von abzufüllendem Produktes zu halten, wobei das Füllorgan (46) als Dosiereinrichtung (24) das abzufüllende Produkt aus einem Vorsilo (48) in den offenen Sack (2) transportiert, und dass die Wägeeinrichtung (25) als Bruttowaage ausgeführt ist und während des Füllvorgangs ein Maß für das in den offenen Sack (2) abgefüllte Gewicht bestimmt, und wobei wenigstens eine Verdichtungseinrichtung (19) während des Füllvorgangs betrieben wird.

11. Verfahren nach dem vorhergehenden Anspruch, wobei der Volumenstrom in Abhängigkeit von der Füllzeit gesteuert wird.

12. Verfahren nach einem der beiden vorhergehenden Ansprüche, wobei ein Füllstand während des Füllvorgangs erfasst und der Volumenstrom in Abhängigkeit von dem Füllstand gesteuert wird.

13. Verfahren nach einem der drei vorhergehenden Ansprüche, wobei ein Füllstand (52) des abzufüllenden Produkts (27) während des Füllvorgangs hoch gehalten wird, während gleichzeitig ein Überlauf vermieden wird.

14. Verfahren nach einem der vier vorhergehenden Ansprüche, wobei die Stärke des Volumenstroms (47) in den offenen Sack (2) mehrfach schwächer und stärker eingestellt wird und wobei das Füllorgan (46) vorzugsweise getaktet betrieben und insbesondere periodisch ein- und ausgeschaltet wird.

15. Verfahren nach einem der fünf vorhergehenden Ansprüche, wobei ein Füllweg (54) durch das Füllorgan (46) periodisch verkleinert und vergrößert wird und/oder wobei eine Füllgeschwindigkeit des Füllorgans (46) variabel gesteuert wird.

## Claims

1. Packaging machine (1) for filling open-mouth bags (2) comprising at least one filling spout (4) having at least one filling opening (5), wherein by way of a motion oriented upwardly relative to the filling spout (4) an open-mouth bag (2) can be appended to the filling spout (4),
wherein a weighing device (25) is provided for weighing a pre-defined quantity of a product (27) intended for bagging,
and wherein a volume flow control device (45) is provided to control during the filling process a strength of the volume flow (47) into the open-mouth bag (2),
**characterized in**
**that** the volume flow control device (45) comprises a filling element (46) and a control device (7) to control during the filling process a strength of the volume flow (47) into the open-mouth bag (2) in dependence both on an increase in weight and on a filling level so as to keep the top bag wall of the open-mouth bag substantially free of product intended for bagging, and that the filling element (46) as the dosing device (24) is provided for transporting the product intended for bagging from a dispensing silo (48) into the open-mouth bag (2), and that the weighing device (25) is configured as a grossweighing device to determine during the filling process a measure for the weight (49) filled into the open-mouth bag (2), and wherein at least one compactor (19) is provided that can be operated during the filling process.

2. The packaging machine (1) according to claim 1 wherein the filling element (46) comprises a filling turbine whose conveying speed can be variably controlled.

3. The packaging machine (1) according to claim 1 or 2 wherein the filling element (46) comprises a stop valve (50) which comprises in particular a lock valve or a squeeze valve.

4. The packaging machine (1) according to any of the preceding claims wherein at least one sensor (51) for capturing a fill height (52) is provided.

5. The packaging machine (1) according to any of the preceding claims wherein the volume flow control device (45) is set up and configured to cause the strength of the volume flow (47) into the open-mouth bag (2) to periodically decrease and increase multiple times.

6. The packaging machine (1) according to the preceding claim wherein at least one compactor (19) is provided as a vibrating device that is configured to dive into the open-mouth bag (2) from above during the filling process.

7. The packaging machine (1) according to any of the preceding claims wherein the filling element (46) is disposed in the dispensing silo (48).

8. The packaging machine (1) according to any of the preceding claims which is configured rotating and at which multiple filling spouts (4) are disposed rotating along.

9. The packaging machine (1) according to any of the preceding claims wherein a stock of more product can be supplied to the dispensing silo (48) during the filling process.

10. Method for filling open-mouth bags (2) by means of a packaging machine (1) wherein an open-mouth bag (2) is appended to the filling spout (4) by way of an upwardly motion directed relative to a filling spout (4), wherein a weighing device (25) is provided for weighing a pre-defined quantity of a product (27) intended for bagging,
and wherein a volume flow control device (45) is provided to control during the filling process a strength of the volume flow (47) into the open-mouth bag (2),
**characterized in**
**that** the volume flow control device (45) comprises a filling element (46) and a control device (7) to control during the filling process a strength of the volume flow (47) into the open-mouth bag (2) in dependence on the filling process so as to keep the top bag wall of the open-mouth bag substantially free of product intended for bagging, wherein the filling element (46) as the dosing device (24) transports the product intended for bagging from a dispensing silo (48) into the open-mouth bag (2), and that the weighing device (25) is configured as a grossweighing device and determines during the filling process a measure for the weight filled into the open-mouth bag (2), and wherein at least one compactor (19) is operated during the filling process.

11. The method according to the preceding claim wherein the volume flow is controlled in dependence on the filling time.

12. The method according to any of the two preceding claims wherein a filling level is captured during the filling process and the volume flow is controlled in dependence on the filling level.

13. The method according to any of the three preceding claims wherein a filling level (52) of the product (27) intended for bagging is retained high during the filling process while at the same time overflowing is avoided.

14. The method according to any of the four preceding claims wherein the strength of the volume flow (47) into the open-mouth bag (2) is set to decrease and increase multiple times and wherein the filling element (46) is preferably operated indexed and is in particular periodically switched on and off.

15. The method according to any of the five preceding claims wherein a filling path (54) is periodically reduced and increased by the filling element (46) and/or wherein a filling rate of the filling element (46) is controlled variably.

## Revendications

1. Emballeuse (1) pour le remplissage de sacs ouverts (2), comprenant au moins une tubulure de remplissage (4) ayant au moins une ouverture de remplissage (5), un sac ouvert (2) pouvant être accroché à la tubulure de remplissage (4) par un mouvement de montée dirigé relativement à la tubulure de remplissage (4), un dispositif de pesée (25) étant prévu afin de peser une quantité prédéfinie d'un produit (27) à ensacher, et un dispositif de commande de débit volumique (45) étant prévu pour commander, lors de l'opération de remplissage, une intensité du débit volumique (47) dans le sac ouvert (2),
**caractérisée par le fait que** ledit dispositif de commande de débit volumique (45) comprend un organe de remplissage (46) et un dispositif de commande (7) afin de commander, durant l'opération de remplissage, une intensité du débit volumique (47) dans le sac ouvert (2) en fonction aussi bien d'une augmentation de poids que d'un niveau de remplissage, afin de maintenir la paroi de sac supérieure du sac ouvert pour l'essentiel exempte de produit à ensacher, et que ledit organe de remplissage (46) est prévu en tant que dispositif de dosage (24) pour transporter le produit à ensacher depuis un pré-silo (48) dans le sac ouvert (2), et que ledit dispositif de pesée (25) est réalisé comme balance brute afin de déterminer, durant l'opération de remplissage, une mesure pour le poids (49) ensaché dans le sac ouvert (2), et dans laquelle au moins un dispositif de compactage (19) apte à être opéré durant l'opération de remplissage est prévu.

2. Emballeuse (1) selon la revendication 1, dans laquelle ledit organe de remplissage (46) comprend une turbine de remplissage dont la vitesse de transport peut être commandée de façon variable.

3. Emballeuse (1) selon la revendication 1 ou 2, dans laquelle ledit organe de remplissage (46) comprend une soupape d'arrêt (50) qui comprend en particulier une vanne d'arrêt ou un robinet-vanne à manchon déformable.

4. Emballeuse (1) selon l'une quelconque des revendications précédentes, dans laquelle au moins un capteur (51) de détection d'un niveau de remplissage (52) est prévu.

5. Emballeuse (1) selon l'une quelconque des revendications précédentes, dans laquelle ledit dispositif de commande de débit volumique (45) est agencé et configuré pour faire diminuer et augmenter périodiquement à plusieurs reprises l'intensité du débit volumique (47) dans le sac ouvert (2).

6. Emballeuse (1) selon l'une quelconque des revendications précédentes, dans laquelle au moins un dispositif de compactage (19) est prévu en tant que dispositif vibrant qui est configuré pour plonger d'en haut dans le sac ouvert (2) durant l'opération de remplissage.

7. Emballeuse (1) selon l'une quelconque des revendications précédentes, dans laquelle ledit organe de remplissage (46) est disposé dans ledit pré-silo (48).

8. Emballeuse (1) selon l'une quelconque des revendications précédentes, laquelle est réalisée de manière rotative et sur laquelle plusieurs tubulures de remplissage (4) sont disposées de manière à tourner en même temps.

9. Emballeuse (1) selon l'une quelconque des revendications précédentes, dans laquelle une réserve d'autre produit peut être amenée au pré-silo (48) durant l'opération de remplissage.

10. Procédé de remplissage de sacs ouverts (2) au moyen d'une emballeuse (1), dans lequel un sac ouvert (2) est accroché, par un mouvement de montée dirigé relativement à une tubulure de remplissage (4), à ladite tubulure de remplissage (4), dans lequel un dispositif de pesée (25) est prévu afin de peser une quantité prédéfinie d'un produit (27) à ensacher, et dans lequel un dispositif de commande de débit volumique (45) est prévu pour commander, lors de l'opération de remplissage, une intensité du débit volumique (47) dans le sac ouvert (2),
**caractérisé par le fait que** le dispositif de commande de débit volumique (45) comprend un organe de remplissage (46) et un dispositif de commande (7) et commande, durant l'opération de remplissage, une intensité du débit volumique (47) dans le sac ouvert (2) en fonction de l'opération de remplissage afin de maintenir la paroi de sac supérieure du sac ouvert pour l'essentiel exempte de produit à ensacher, ledit organe de remplissage (46), en tant que dispositif de dosage (24), transportant le produit à ensacher depuis un pré-silo (48) dans le sac ouvert (2), et que ledit dispositif de pesée (25) est réalisé comme balance brute et détermine, durant l'opération de remplissage, une mesure pour le poids ensaché dans le sac ouvert (2), et dans lequel au moins un dispositif de compactage (19) est opéré durant l'opération de remplissage.

11. Procédé selon la revendication précédente, dans lequel le débit volumique est commandé en fonction du temps de remplissage.

12. Procédé selon l'une quelconque des deux revendications précédentes, dans lequel un niveau de remplissage est détecté durant l'opération de remplissage et le débit volumique est commandé en fonction du niveau de remplissage.

13. Procédé selon l'une quelconque des trois revendications précédentes, dans lequel un niveau de remplissage (52) du produit à ensacher (27) est maintenu élevé durant l'opération de remplissage, tandis que, en même temps, un débordement est évité.

14. Procédé selon l'une quelconque des quatre revendications précédentes, dans lequel l'intensité du débit volumique (47) dans le sac ouvert (2) est réglée à plusieurs reprises de manière à être plus faible et plus importante, et dans lequel ledit organe de remplissage (46) est opéré, de préférence, de manière cadencée et, en particulier, est mis en marche et arrêté périodiquement.

15. Procédé selon l'une quelconque des cinq revendications précédentes, dans lequel un chemin de remplissage (54) est réduit et augmenté périodiquement par l'organe de remplissage (46), et/ou dans lequel une vitesse de remplissage de l'organe de remplissage (46) est commandée de manière variable.
